# EUROPEAN PATENT APPLICATION

(11) **EP 4 848 759 A1**
(43) Date of publication of application: **02.12.2026**
(21) Application number: 25218722.4
(22) Date of filing: 26.11.2025
(51) Int. Cl.: H04R 25/00

(54) **METHODS OF OPERATING A HEARING AID WITH IMAGE DATA, AND HEARING AID**

(71) Applicant: Oticon A/S, 2765 Smørum (DK)
(72) Inventor: RIEMER, Lars, DK-2765 Smørum (DK)
(74) Representative: Demant

(57) **Abstract**

A method of operating a hearing aid is disclosed. The method comprising obtaining, by an image sensor of the hearing aid, image data indicative of a readable image in an environment of the hearing aid, determining, by a processor of the hearing aid, based on the image data, hearing aid data indicative of a setting for the hearing aid, and adjusting, by the processor, based on the hearing aid data, one or more audio parameters of the hearing aid.

## Description

### TECHNICAL FIELD

The present disclosure generally relates to the field of hearing aids, in particular method of operating hearing aids.

### SUMMARY

### A method of operating a hearing aid:

In an aspect of the present disclosure, a method of operating a hearing aid is provided. The method includes obtaining, by an image sensor of the hearing aid, image data indicative of a readable image in an environment of the hearing aid. The method includes determining, by a processor of the hearing aid, based on the image data, hearing aid data indicative of a setting for the hearing aid. The method includes adjusting, by the processor, based on the hearing aid data, one or more audio parameters of the hearing aid.

Advantageously, the disclosed method can allow for hearing aids to benefit from location awareness. For example, in the kitchen, appliance noise is expected and can be suppressed by the disclosed method. In the dining room, knife/fork noise can be suppressed by the disclosed method. At the TV, disclosed method can include switching the hearing aid to the TV program. Outside, wind noise can be suppressed by the disclosed method.

Thereby an improved method of operating a hearing aid may be provided.

The method includes obtaining, by an image sensor of the hearing aid, image data. The image data can be indicative of a readable image in an environment of the hearing aid (e.g., an environment around the hearing aid).

The hearing aid can include an image sensor. The image sensor can be configured to obtain image data of the environment. The image sensor can be configured to obtain discrete image data (e.g., at a specific time). The image sensor can be configured to obtain a plurality of images (e.g., continuously, e.g., video data) and selected particular images for the image data. The image sensor can provide the image data to one or more components of the hearing aid. For example, the image sensor can provide the image data to a processor. The image sensor can be a forward-facing image sensor. For example, the image sensor can be directed towards where a user of the hearing aid is looking.

In one or more example methods, the image sensor is a camera. In one or more example methods, the image sensor can be a video camera.

The image data can be indicative of a readable image. The readable image can be understood as an image readable by the hearing aid (e.g., a processor of the hearing aid). The readable image may not be readable directly by a user of the hearing aid.

In one or more example methods, the readable image is a machine-readable code. The readable image can be a QR code. The readable image can be a readable barcode. The readable image data may be an encrypted image. The readable image may be one dimensional and/or two dimensional.

In one or more example methods, the readable image is an infrared (IR) image (e.g., IR image data). This may allow for the readable image to be unseen by a user, but still seen by the hearing aid, which can de-clutter a user's visual field.

In one or more example methods, the readable image is a visible spectrum image (e.g., visible spectrum image data). This may allow for a user to also be able to see the readable image. This may allow for ease of a user to direct the image sensor towards the readable image. Further, the readable image could include standard writing with some added symbol stating that this is relevant for the hearing aid.

In one or more example methods, the readable image is a visible spectrum image combined with an IR image. In one or more example methods, the readable image can be visible in both the visible spectrum and in infrared.

In one or more examples, the readable image can be displayed on a screen. The readable image can be static and/or dynamic (e.g., a screen showing the current noise profile for noise suppression).

The method includes determining (e.g., obtaining), by a processor of the hearing aid, based on the image data, hearing aid data indicative of a setting for the hearing aid. The hearing aid data may be location data. The hearing aid data may be indicative of a location of the hearing aid.

Hearing aid data can be data indicative of particular properties of a hearing aid. For example, hearing aid data can be indicative of the settings of the hearing aid. Settings can include, for example, noise cancellation and/or suppression, wireless connectivity, gain, Bluetooth connectivity, etc. The particular setting is not limiting. The hearing aid data can be indicative of an activation or a deactivation of a particular setting on a hearing aid.

Hearing aid data can be data relevant to the hearing aid. For example, hearing aid data can be indicative of suggested settings. Hearing aid data can be indicative of an internet URL containing data.

In one or more example methods, the hearing aid data comprises location data indicative of a location for the hearing aid. The location data can be indicative of a location that the hearing aid is in. The location data can be indicative of settings for the hearing aid, such as to be applied to the hearing aid in that particular setting. The method can also include obtaining, by the processor, GPS data indicative of a location of the hearing aid.

For example, the method can include obtaining image data indicative of a readable image. The readable image indicates that the hearing aid is in Conference Room A. Based on this image data, the hearing aid can be configured to determine hearing aid data indicative of settings for the hearing aid (e.g., connecting to a particular Wi-Fi network, connecting to an audio system in Conference Room A, adjusting gain settings for a large conference room). When the user enters a new room, such as Conference Room B, the method can include determining new hearing aid data for settings of the hearing aid for Conference Room B.

The hearing aid includes a processor (e.g., processors, one or more processors). The hearing aid can include a plurality of processors. The processor can be used, for example, to modify the electrical input signal. The processor can be configured to perform further actions as well. The processor can be configured to receive the image data.

The method can include adjusting, by the processor, based on the hearing aid data, one or more audio parameters of the hearing aid. Audio parameters can include, for example, noise cancellation and/or suppression, wireless connectivity, gain, Bluetooth connectivity, etc. In other words, the method can include changing an operation (e.g., audio parameters) of the hearing aid based on the hearing aid data. Audio parameters can be joining (e.g., connecting to) a video meeting.

In one or more example methods, adjusting one or more audio parameters comprises turning on or off noise cancellation. In one or more example methods, adjusting one or more audio parameters comprises connecting, by the processor, to a wireless network.

In one or more example methods, determining the hearing aid comprises comparing, by the processor, the image data with stored image data indicative of stored hearing aid data. In one or more example methods, in accordance with the image data being stored image data, determining the hearing aid location data as the stored hearing aid data. In one or more example methods, in accordance with the image data not being stored image data, not determining the hearing aid data as the stored hearing aid location data.

The stored image data can be stored in a memory of the hearing aid. The stored image data can be stored external to the hearing aid. The method can comprise obtaining the stored hearing aid location data.

In other words, the method can include checking whether the hearing aid data has already been stored by the hearing aid (e.g., the hearing aid has experienced the current situation before). The method can include obtaining the stored hearing aid data from the memory.

In one or more example methods, determining the hearing aid data comprises accessing, by the processor, an internet URL. In one or more example methods, determining the hearing data comprises determining, based on internet data from the internet URL, the hearing aid data. In one or more example methods, determining the hearing aid data comprises accessing, by the processor, a (Uniform) Resource Identifier.

The method can include accessing the internet URL. The method can include retrieving hearing aid data from the internet URL. In other words, certain hearing aid settings can be stored online. For example, the internet URL can contain instructions for the hearing aid settings.

In one or more example methods, the method can further include determining, based on the image data, status data indicative of whether the image data is public, proprietary, an/or private image data. In one or more example methods, the determining the hearing aid location data is further based on the status data. Any part of the image data can be encrypted, and other part of the image data can hint at decryption - e.g. the public part of a public/private encryption scheme.

For example, in accordance with the status data being indicative of private data and/or proprietary, the method can include not adjusting one or more audio parameters. In accordance with the status data being indicative of public data, the method can include adjusting the one or more audio parameters.

In one or more example methods, the method can further include outputting, by a transceiver of the hearing aid, the hearing aid location data to an accessory device.

In one or more example methods, the accessory device is configured to display, based on the hearing aid data, an image. In one or more example methods, the accessory device is configured to display, based on the hearing aid data, display data (e.g., text). For example, the user can have a cellular phone in communication with the hearing aid. The cellular phone can display information from the hearing aid based on the readable image.

In one or more example methods, wherein the method is performed without user input. In one or more example, the method includes obtaining user input. The adjusting can be performed additionally based on the user input.

### A hearing aid:

It is intended that some or all of the method steps of the method described above, in the 'detailed description of embodiments' or in the claims can be combined with embodiments of the hearing aid, when appropriately substituting a corresponding process and vice versa. Embodiments of the hearing aid have the same advantages as the corresponding methods.

Disclosed herein are embodiment of a hearing aid. The hearing aid can be configured to operate any and/or all of the methods disclosed above. The hearing aid includes an image sensor configured to obtain the image data indicative of a readable image in an environment of the hearing aid. The hearing aid includes a processor. The processor is configured to determine, based on the image data, hearing aid data indicative of a setting for the hearing aid. The processor is configured to adjust based on the hearing aid data, one or more audio parameters of the hearing aid.

The hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user (e.g., audio parameter). The hearing aid may comprise a signal processor for enhancing the input signals and providing a processed output signal.

The hearing aid may comprise an output unit for providing a stimulus perceived by the user as an acoustic signal based on a processed electric signal. The output unit may be a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a (e.g. wireless) transmitter for transmitting sound picked up-by the hearing aid to another device, e.g. a far-end communication partner (e.g. via a network, e.g. in a telephone mode of operation).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound.

The wireless receiver and/or transmitter may e.g. be configured to receive and/or transmit an electromagnetic signal in the radio frequency range (3 kHz to 300 GHz). The wireless receiver and/or transmitter may e.g. be configured to receive and/or transmit an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

The hearing aid may comprise antenna and transceiver circuitry allowing a wireless link to an entertainment device (e.g. a TV-set), a communication device (e.g. a telephone), a wireless microphone, a separate (external) processing device, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology, e.g. LE audio), or Ultra WideBand (UWB) technology.

The hearing aid may comprise a 'forward' (or 'signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate fₛ, fₛ being e.g. in the range from 8 kHz to 48 kHz (adapted to the particular needs of the application) to provide digital samples xₙ (or x[n]) at discrete points in time tₙ (or n), each audio sample representing the value of the acoustic signal at tₙ by a predefined number N_{b} of bits, N_{b} being e.g. in the range from 1 to 48 bits, e.g. 24 bits. Each audio sample is hence quantized using N_{b} bits (resulting in 2^{Nb} different possible values of the audio sample). A digital sample x has a length in time of 1/fₛ, e.g. 50 µs, for *fₛ* = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid, e.g. the input unit, and or the antenna and transceiver circuitry may comprise a transform unit for converting a time domain signal to a signal in the transform domain (e.g. frequency domain or Laplace domain, Z transform, wavelet transform, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-) frequency domain. The frequency range considered by the hearing aid from a minimum frequency fₘᵢₙ to a maximum frequency fₘₐₓ may comprise a part of the typical human audible frequency range from 20 Hz to 20 kHz, e.g. a part of the range from 20 Hz to 12 kHz. Typically, a sample rate fₛ is larger than or equal to twice the maximum frequency fₘₐₓ, fₛ ≥ 2fₘₐₓ. A signal of the forward and/or analysis path of the hearing aid may be split into a number *NI* of frequency bands (e.g. of uniform width), where *NI* is e.g. larger than 5, such as larger than 10, such as larger than 50, such as larger than 100, such as larger than 500, at least some of which are processed individually. The hearing aid may be adapted to process a signal of the forward and/or analysis path in a number *NP* of different frequency channels (*NP* ≤ *NI*). The frequency channels may be uniform or non-uniform in width (e.g. increasing in width with frequency), overlapping or non-overlapping.

The hearing aid may be configured to operate in different modes, e.g. a normal mode and one or more specific modes, e.g. selectable by a user, or automatically selectable. A mode of operation may be optimized to a specific acoustic situation or environment, e.g. a communication mode, such as a telephone mode. A mode of operation may include a low-power mode, where functionality of the hearing aid is reduced (e.g. to save power), e.g. to disable wireless communication, and/or to disable specific features of the hearing aid. Different modes can be considered audio parameters.

The hearing aid may comprise a number of detectors (e.g., image sensor) configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

The hearing aid may comprise a classification unit configured to classify the current situation based on input signals from (at least some of) the detectors, and possibly other inputs as well. In the present context 'a current situation' may be taken to be defined by one or more of
a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a recurrent neural network, e.g. a trained neural network.

The hearing aid may comprise an acoustic (and/or mechanical) feedback control (e.g. suppression) or echo-cancelling system. Adaptive feedback cancellation has the ability to track feedback path changes over time. It is typically based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user.

### A hearing system:

In a further aspect, a hearing system comprising a hearing aid as described above, in the 'detailed description of embodiments', and in the claims, AND an auxiliary device is moreover provided.

The hearing system may be adapted to establish a communication link between the hearing aid and the auxiliary device to provide that information (e.g. control and status signals, possibly audio signals) can be exchanged or forwarded from one to the other.

The auxiliary device may be constituted by or comprise a remote control, a smartphone, or other portable or wearable electronic device, such as a smartwatch or the like.

The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).

The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC, a wireless microphone, etc.) and adapted for selecting and/or combining an appropriate one of the received audio signals (or combination of signals) for transmission to the hearing aid.

The auxiliary device may be constituted by or comprise another hearing aid. The hearing system may comprise two hearing aids adapted to implement a binaural hearing system, e.g. a binaural hearing aid system.

### Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 shows an example method of operating a hearing aid according to the disclosure.
FIG. 2 shows an example hearing aid according to the disclosure, and
FIG. 3 shows an example block diagram of a hearing aid according to the disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present application relates to the field of method of operating a hearing aids.

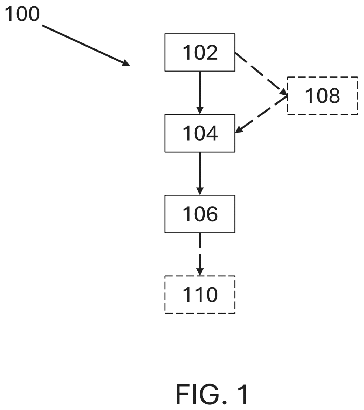

FIG. 1 shows an example method of operating a hearing aid according to the disclosure.

Specifically, FIG. 1 illustrates a method 100 of operating a hearing aid. The method 100 can include obtaining 102, by an image sensor of the hearing aid, image data indicative of a readable image in an environment of the hearing aid. The image sensor can be a camera. The method 100 can include determining 104, by a processor of the hearing aid, based on the image data, hearing aid data indicative of a setting for the hearing aid. The method 100 can include adjusting 106, by the processor, based on the hearing aid data, one or more audio parameters of the hearing aid.

The hearing aid data, in some instances, can include location data indicative of a location for the hearing aid.

The readable image can be a machine-readable code. The readable image can be an infrared (IR) image and/or a visible spectrum image.

Determining 104 the hearing aid data can include comparing, by the processor, the image data with stored image data indicative of stored hearing aid data, and in accordance with the image data being stored image data, determining the hearing aid data as the stored hearing aid data. Determining 104 the hearing aid data can include accessing, by the processor, an internet URL and determining, based on internet data from the internet URL, the hearing aid data.

Adjusting one or more audio parameters comprises turning on or off noise cancellation. Adjusting one or more audio parameters comprises connecting, by the processor, to a wireless network.

The method 100 can be performed without user input.

The method 100 can further optionally include determining 108, based on the image data, status data indicative of whether the image data is public, proprietary, and/or private image data, and the determining hearing aid data is further based on the status data.

The method 100 can further optionally include outputting 110, by a transceiver of the hearing aid, the hearing aid data to an accessory device. The accessory device can be configured to display, based on the hearing aid data, an image.

Accordingly, the method 100 can allow for the creation of readable images (e.g., "QR-like code" beacon stickers) that the hearing aid can detect using the image sensor. These passive readable images are extremely cheap, and last for a long time. The "QR-like code" can be modified so that normal QR-code readers do not pick up the readable images.

Beneficially, end-users or hearing care professional can print out readable images (e.g., readable images stickers) themselves, customised to whatever message is desired.

The readable images are, unlike BLE beacons, directional in nature. There is no unwanted leakage thru a wall like for radio, and no surprise reflections. If more directionality is required, a simple paper screen can alleviate the issue. If onmi-directionality is required, the readable images can be duplicated and mounted pointed in another direction.

The readable images could be shown on a screen if they belong with a powered device - so the readable images for TV could turn off and on with the TV.

The readable images could be written using "invisible" IR ink, to make the beacon unobtrusive to the eye but still visible to the hearing aid. Typically, smartphone cameras have an IR-blocking filter installed to remove IR, by leaving out that filter the hearing aid camera will see the readable images.

The readable images can be printed in a large format for visibility in a large space.

The readable images coding (e.g., status data) can come with several layers of access using different encryption keys:
- Public - readable for all
- Proprietary - restricted to companies
- Private - tied to a specific hearing aid user.

The readable images can have an IR LED attached, to call extra attention to an important readable images.

The readable images can, like regular QR-codes, point to a URL for further information; either for use by the hearing aid, or for use by the end-user, or both.

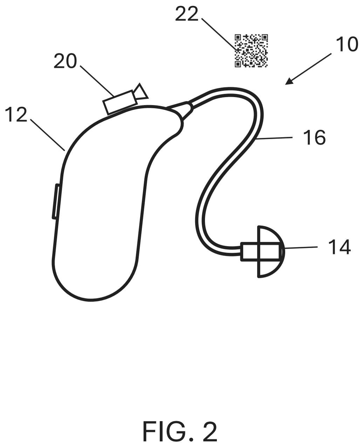

FIG. 2 shows an example hearing aid 10 according to the disclosure. As shown, the hearing aid 10 itself includes an image sensor 20. The image sensor 20 can be configured to obtain image date indicative of a readable image 22.

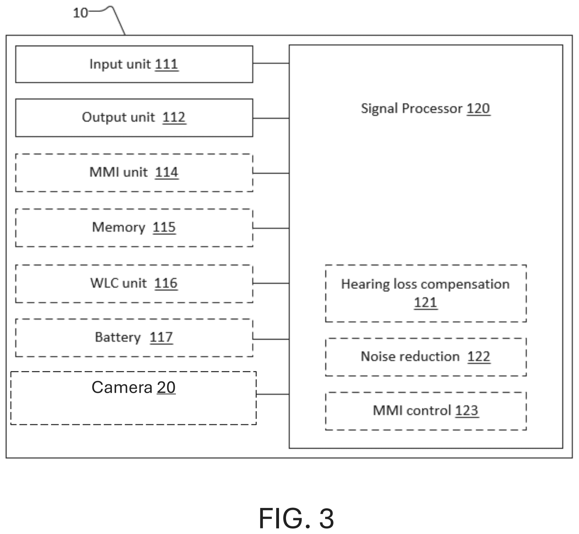

FIG. 3 shows an example block diagram of an example hearing aid 10 according to the disclosure. The hearing aid 10 comprises an input unit 111, an output unit 112, a man-machine interface unit 114, a memory 115, a wireless communication unit (WLC unit) 116, a battery 117 and a processor 120 (e.g., signal processor). The battery may be a single-use battery or a rechargeable battery. The processor 120 may comprise a unit 121 configured to perform hearing loss compensation, a unit 122 configured to perform noise reduction, and a unit (MMI control) 123 for controlling man-machine interfacing. The processor 120 can be configured to determine, based on the camera signal, a classification of the electrical input signal. The processor 120 can be configured to apply, based on a classification, gain and/or attenuation to the electrical input signal for provision of an output signal.

The input unit 111 is configured convert a sound in an environment of the hearing aid 10 to an electrical input signal representative of the sound. The input unit 111 may comprise an input transducer, e.g., one or more microphones, for converting an input sound to the electrical input signal. The input unit 111 may comprise a wireless receiver for receiving a wireless signal comprising or representing sound and for providing the electrical input signal representing sound.

The output unit 112 may comprise an output transducer. The output transducer may comprise a speaker and/or a loudspeaker (sometimes denoted a receiver) for providing an acoustic signal to the user of the hearing aid. The output unit 112 may, additionally or alternatively, comprise a transmitter for transmitting sound picked up by the hearing aid to another device. The output unit 112 can output the output signal provided by the processor 120.

One or both of the input unit 111 and the noise reduction unit 122 may comprise a directional microphone system. The directional microphone system is adapted to spatially filter sounds from the surroundings of the user wearing the hearing aid, and thereby enhance a target acoustic source among a multitude of acoustic sources in the surroundings of the user. The directional system may be adapted to detect, e.g., adaptively detect, from which direction a particular part of the microphone signal originates. This can be achieved in different ways as described e.g., in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

In certain examples, the hearing aid 10 can include an image sensor 20. The image sensor 20 can be configured to obtain image data indicative of a readable image.

In certain examples, the memory 115 can include stored image data.

The man-machine interface unit 114 may comprise one or more hardware elements, e.g., one or more buttons, one or more accelerometers and one or more microphones, to detect user interaction.

The wireless communication unit 116 may include a short-range wireless radio e.g., including a controller in communication with the processor.

The processor 120 may be configured with a signal processing path receiving audio data via the input unit with one or more microphones and/or via a radio unit; processing the audio data to compensate for a hearing loss; and rendering processed audio data via an output unit e.g., comprising a loudspeaker. The signal processing path may comprise one or more control paths and one or more feedback paths. The signal processing path may comprise a multitude of signal processing stages.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A method of operating a hearing aid, the method comprising:
obtaining, by an image sensor of the hearing aid, image data indicative of a readable image in an environment of the hearing aid;
determining, by a processor of the hearing aid, based on the image data, hearing aid data indicative of a setting for the hearing aid; and
adjusting, by the processor, based on the hearing aid data, one or more audio parameters of the hearing aid.

2. The method of claim 1, wherein the hearing aid data comprises location data indicative of a location for the hearing aid.

3. The method of any one of the previous claims, wherein the readable image is a machine-readable code

4. The method of any one of the previous claims, wherein the image sensor is a camera.

5. The method of any one of the previous claims, wherein the readable image is an infrared (IR) image.

6. The method of any one of the previous claims, wherein the image data is a visible spectrum image.

7. The method of any one of the previous claims, wherein determining the hearing aid data comprises comparing, by the prhocessor, the image data with stored image data indicative of stored hearing aid data, and in accordance with the image data being stored image data, determining the hearing aid data as the stored hearing aid data.

8. The method of any one of the previous claims, wherein determining the hearing aid data comprises accessing, by the processor, an internet URL and determining, based on internet data from the internet URL, the hearing aid data.

9. The method of any one of the previous claims, further comprising determining, based on the image data, status data indicative of whether the image data is public, proprietary, and/or private image data, and the determining hearing aid data is further based on the status data.

10. The method of any one of the previous claims, further comprising outputting, by a transceiver of the hearing aid, the hearing aid data to an accessory device.

11. The method of claim 10, wherein the accessory device is configured to display, based on the hearing aid data, an image.

12. The method of any one of the previous claims, wherein adjusting one or more audio parameters comprises turning on or off noise cancellation.

13. The method of any one of the previous claims, wherein adjusting one or more audio parameters comprises connecting, by the processor, to a wireless network.

14. The method of any one of the previous claims, wherein the method is performed without user input.

15. A hearing aid configured to operate the method of any one of the previous claims, wherein the hearing aid comprises:
an image sensor configured to obtain the image data indicative of a readable image in an environment of the hearing aid; and
a processor configured to:
determine, based on the image data, hearing aid data indicative of a setting for the hearing aid; and
adjust based on the hearing aid data, one or more audiological parameters of the hearing aid.
